# FASCICULE DE BREVET EUROPEEN

(11) **EP 3 628 908 B1**
(45) Date de publication et mention de la délivrance du brevet: **01.11.2023**
(21) Numéro de dépôt: 19199600.8
(22) Date de dépôt: 25.09.2019
(51) Int. Cl.: F16L 37/088, F16L 37/14

(54) **DISPOSITIF DE RACCORDEMENT FLUIDIQUE POUR UN CIRCUIT DE FLUIDE D'UN VEHICULE AUTOMOBILE**
FLÜSSIGKEITSANSCHLUSSVORRICHTUNG FÜR EINEN FLÜSSIGKEITSKREISLAUF EINES KRAFTFAHRZEUGS
FLUID CONNECTION DEVICE FOR A FLUID CIRCUIT OF A MOTOR VEHICLE

(30) Priorité: 28.09.2018 FR 1858982
(43) Date de publication de la demande: 01.04.2020
(73) Titulaire: HUTCHINSON, 75008 Paris (FR)
(72) Inventeur: THILLET, Antoine, 45200 MONTARGIS (FR); ESCURE, Steeven, 45700 SAINT-MAURICE-SUR-FESSARD (FR); ULLY, Stéphane, 45120 CHALETTE SUR LOING (FR)
(74) Mandataire: Gevers & Orès

(56) Documents cités:
- EP-A1- 2 722 574
- EP-A1- 2 988 048
- EP-A1- 3 339 709

## Description

### DOMAINE TECHNIQUE

La présente invention concerne un dispositif de raccordement fluidique en particulier pour un circuit de fluide d'un véhicule automobile. Un tel dispositif peut être utilisé dans un circuit d'alimentation en carburant, un circuit de dépollution, un circuit d'assistance au freinage, etc., d'un véhicule.

### ETAT DE L'ART

L'état de l'art comprend notamment les documents FR-A1-2 795 156 et FR-A1-2 945 100 de la Demanderesse.

Ce document décrit un dispositif de raccordement fluidique équipé d'un témoin visuel de bonne connexion entre deux raccords, respectivement mâle et femelle.

Ce type de dispositif comporte :
- un raccord fluidique femelle comportant un logement d'insertion d'un raccord fluidique mâle, par translation le long d'un axe A,
- un verrou de forme générale en U porté par ledit raccord femelle et comportant une paire de pattes élastiquement déformables, ces pattes étant disposées sensiblement dans un premier plan perpendiculaire audit axe A et de part et d'autre dudit axe et étant destinées à coopérer par encliquetage élastique avec ledit raccord mâle de façon à assurer une retenue dudit raccord mâle dans ledit raccord femelle le long dudit axe A, et
- un témoin de verrouillage porté par ledit raccord femelle et apte à se déplacer en translation dans un second plan perpendiculaire à l'axe A.

Le raccord mâle comprend en général une nervure annulaire externe et les pattes du verrou coopèrent par encliquetage élastique avec cette nervure lors de l'insertion du raccord mâle dans le logement du raccord femelle. Lors de cette insertion, la nervure du raccord mâle prend appui sur l'avant des pattes et les écarte l'une de l'autre par déformation élastique. L'insertion du raccord mâle est poursuivie jusqu'à ce que la nervure soit positionnée en arrière des pattes. Par retour élastique, les pattes reprennent une position moins ou non contraintes dans laquelle elles s'étendent en arrière de la nervure et bloquent un retrait du raccord mâle du raccord femelle par translation le long de l'axe A.

Lorsque le raccord mâle n'est pas engagé dans le raccord femelle, le témoin coopère avec le raccord femelle de façon à ne pas pouvoir être déplacé vis-à-vis du raccord femelle. Si le raccord mâle est engagé dans le raccord femelle mais pas suffisamment ou pas correctement positionné dans le raccord femelle, le témoin ne peut toujours pas être déplacé par rapport au raccord femelle. Le raccord mâle doit être correctement positionné dans le raccord femelle pour autoriser ce déplacement. Cette position correcte est définie dans l'exemple précité comme étant le fait que la nervure du raccord mâle se retrouve en arrière des pattes du verrou et donc que les pattes du verrou aient bien coopéré par encliquetage élastique avec la nervure et aient repris leur position libre de retenue du raccord mâle. Dans cette position, la nervure du raccord mâle coopère avec le témoin pour autoriser son déplacement vis-à-vis du raccord femelle. Le témoin peut alors être déplacé vis-à-vis du raccord femelle depuis la position initiale, par exemple de libération du verrou, dans laquelle le verrou peut donc être déplacé, jusqu'à une seconde position, par exemple de blocage du verrou, dans laquelle le verrou et donc le raccord mâle sont bloqués. Cette seconde position du témoin assure donc d'une part le bon positionnement du raccord mâle sous la forme d'un « témoin visuel », voire le blocage du verrou dans sa position de retenue du raccord mâle.

Dans la technique actuelle, les fonctions du témoin sont en général assurées par une paire de pattes dont la capacité de déformation élastique par écartement est déterminée pour répondre au mieux à ces fonctions. Cependant, le compromis peut se faire au détriment de certaines de ces fonctions.

L'état de l'art comprend également les documents EP-A1 -2 988 048, EP-A1-2 722 574 et EP-A1 -3 339 709.

La présente invention propose un perfectionnement à cette technologie.

### EXPOSE DE L'INVENTION

L'invention concerne un dispositif de raccordement fluidique, en particulier pour un circuit de fluide d'un véhicule automobile, comportant :
- un raccord fluidique femelle comportant un logement d'insertion d'un raccord fluidique mâle, par translation le long d'un axe A,
- un verrou de forme générale en U porté par ledit raccord femelle et comportant une paire de pattes élastiquement déformables, ces pattes étant disposées sensiblement dans un premier plan perpendiculaire audit axe A et de part et d'autre dudit axe et étant destinées à coopérer par encliquetage élastique avec ledit raccord mâle de façon à assurer une retenue dudit raccord mâle dans ledit raccord femelle le long dudit axe A,
- un témoin de verrouillage porté par ledit raccord femelle et apte à se déplacer en translation dans un second plan perpendiculaire à l'axe A, entre une première position de libération dudit verrou et une seconde position de blocage dudit verrou,

dans lequel ledit témoin comprend au moins une première paire de pattes et une deuxième paire de pattes, les pattes de la première paire étant séparées des pattes de la deuxième paire et les pattes de la première paire ayant une capacité de déformation élastique par écartement l'une de l'autre, qui est différente de la même capacité de la deuxième paire,
   - ladite première paire de pattes étant destinée à coopérer par déformation élastique avec ledit raccord mâle, depuis une première position sensiblement libre sans contrainte dans laquelle ces pattes coopèrent avec ledit raccord femelle pour interdire une translation du témoin dans ledit second plan vers l'axe A, jusqu'à une position contrainte dans laquelle ledit témoin est apte à se déplacer en translation dans le second plan,
   - ladite deuxième paire de pattes étant destinée à coopérer par butée avec les pattes dudit verrou pour limiter leur écartement, lorsque ledit témoin est dans sa seconde position,
caractérisé en ce que les pattes de la deuxième paire sont configurées pour être chacune prises en sandwich entre une des pattes dudit verrou et une paroi latérale dudit raccord femelle.

L'invention propose ainsi de rendre indépendante les pattes du témoin. Les pattes de la première paire coopèrent au moins avec les raccords mâle et femelle, et les pattes de la deuxième paire coopèrent au moins avec les pattes du verrou. L'indépendance des pattes permet d'ajuster leur capacité de déformation élastique indépendamment les unes des autres et donc d'adapter cette capacité à la fonction recherchée.

Les pattes de la première paire ont par exemple une résistance à l'écartement comprise entre 1N et 100N, de préférence entre 10N et 50N, et plus préférentiellement entre 15N et 30N. Elles ont par exemple une capacité maximale de déplacement sous charge comprise entre 5 et 10mm.

Les pattes de la deuxième paire ont par exemple une résistance à l'écartement comprise entre 100N et 500N, de préférence entre 150N et 400N, et plus préférentiellement entre 200N et 300N. Elles ont par exemple une capacité maximale de déplacement sous charge comprise entre 1 et 5mm.

La machine utilisée pour mesurer la résistance à l'écartement est par exemple un dynamomètre Tinius Olsen H25KT.

Le dispositif selon l'invention peut comprendre une ou plusieurs des caractéristiques suivantes, prises isolément les unes des autres ou en combinaison les unes avec les autres :
- ledit témoin comprend une troisième paire de pattes qui sont séparées des pattes des première et de deuxième paires et qui ont une capacité de déformation élastique par écartement l'une de l'autre, qui est différente de la même capacité de la première et/ou de la deuxième paire(s), ladite troisième paire de pattes étant destinée à coopérer par encliquetage élastique avec ledit raccord femelle pour retenir ledit témoin vis-à-vis dudit raccord femelle en translation dans ledit second plan,
- les pattes de la troisième paire ont par exemple une résistance à l'écartement comprise entre 1N et 100N, de préférence entre 10N et 50N, et plus préférentiellement entre 15N et 30N ; elles ont par exemple une capacité maximale de déplacement sous charge comprise entre 5 et 10mm,
- les pattes de ladite troisième paire comprennent des crochets orientés vers l'intérieur par rapport à l'axe A, et des crochets orientés vers l'extérieur,
- ledit raccord femelle comprend une interface de raccordement comportant ledit logement et reliée à une queue de liaison s'étendant d'un côté dudit interface le long dudit axe A, la queue de liaison comportant une partie cylindrique comportant des premiers organes d'accrochage orientés vers l'extérieur par rapport à l'axe A et configurés pour coopérer avec lesdits crochets intérieurs, et ladite interface comportant deux pattes en regard des premiers organes et comportant des seconds organes d'accrochage configurés pour coopérer avec lesdits crochets extérieurs,
- lesdits premiers organes sont situés dans un troisième plan parallèle à l'axe A, et lesdits seconds organes sont situés dans un quatrième plan parallèle au troisième plan et plus éloigné de l'axe A que ne l'est le troisième plan,
- les pattes de ladite troisième paire sont configurées pour subir chacune une double flexion, respectivement vers l'intérieur et vers l'extérieur par rapport à l'axe A, lors du passage du témoin entre sa première et sa seconde position, et inversement ; cet effet de « chicane » permet de garantir le caractère imperdable du témoin vis-à-vis du raccord femelle,
- les paires de pattes s'étendent dans des plans parallèles et décalées les uns des autres,
- le plan de la première paire de pattes est situé entre les plans des deuxième et troisième paires de pattes,
- les pattes de la troisième paire sont alignées axialement avec les pattes de la deuxième paire,
- les paires de pattes sont reliées à un capot de fermeture d'une cavité dudit raccord femelle,
- les pattes de la deuxième paire comprennent des premières portions libres écartées l'une de l'autre d'une distance L2 et reliées audit capot par des secondes portions écartées l'une de l'autre d'une distance L1 qui est inférieure à L2, lesdites pattes du verrou étant destinées à être en vis-à-vis desdites premières portions lorsque le témoin est dans sa première position, et à être en vis-à-vis desdites secondes portions lorsque le témoin est dans sa seconde position ; les secondes portions des pattes du témoin sont ainsi aptes à empêcher par butée un écartement des pattes du verrou, qui soit suffisant pour libérer le raccord mâle du raccord femelle,
- le capot a une forme générale plane et parallélépipédique, et les pattes des deuxième et troisième paires sont reliées respectivement aux quatre coins d'une des faces du capot,
- les pattes de la première paire sont reliées sensiblement au milieu de ladite face du capot,
- ledit raccord femelle comprend une paroi comportant une ouverture de passage dudit raccord mâle, lesdites pattes dudit verrou étant aptes à prendre appui sur une surépaisseur de cette paroi qui forme par exemple un bossage annulaire autour de ladite ouverture ; le raccord femelle est ainsi renforcée et résiste mieux à l'arrachement du raccord mâle par rapport au raccord femelle,
- ledit verrou comprend un ergot en saillie configuré pour être engagé en force ou par déformation élastique dans un orifice dudit raccord femelle.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'un dispositif de raccordement fluidique selon l'invention,
- les figures 2 à 4 sont des vues schématiques en perspective et en coupe d'un raccord femelle du dispositif de la figure 1,
- la figure 5 est une vue schématique en perspective d'un raccord mâle du dispositif de la figure 1,
- les figures 6 et 7 sont des vues schématiques en perspective et en coupe axiale du dispositif de la figure 1, le raccord mâle étant absent à la figure 7,
- la figure 8 est une vue schématique en perspective d'un verrou et d'un témoin du dispositif de la figure 1,
- les figures 9 et 10 sont des vues schématiques en perspective du verrou de la figure 8,
- les figures 11 et 12 sont des vues schématiques en perspective du témoin de la figure 8,
- les figures 13 à 24 sont des vues schématiques en perspective et/ou en coupe du dispositif de la figure 1, le témoin étant dans une première position aux figures 15-18 et dans une seconde position aux figures 13, 14 et 19-24,
- les figures 25 et 26 sont des vues schématiques respectivement en perspective et en coupe d'un anneau de centrage et/ou de blocage, du dispositif de la figure 1,
- les figures 27 et 28 sont des vues schématiques respectivement en perspective et en coupe d'une variante de réalisation de l'anneau de centrage et/ou de blocage, du dispositif,
- la figure 29 est une vue schématique en coupe axiale d'un dispositif de raccordement fluidique, dans lequel est monté l'anneau des figures 27 et 28,
- les figures 30 et 31 sont des vues schématiques en coupe du dispositif de la figure 1 et illustrent une étape d'encliquetage élastique du raccord mâle dans le raccord femelle,
- les figures 32 et 33 sont des vues schématiques en coupe du dispositif de la figure 1 et illustrent une étape de déverrouillage du verrou et de retrait du raccord mâle du raccord femelle, et
- la figure 34 est une vue schématique en perspective d'un dispositif et illustre une étape de déverrouillage du témoin avant son déplacement de sa seconde à se première position.

### DESCRIPTION DETAILLEE

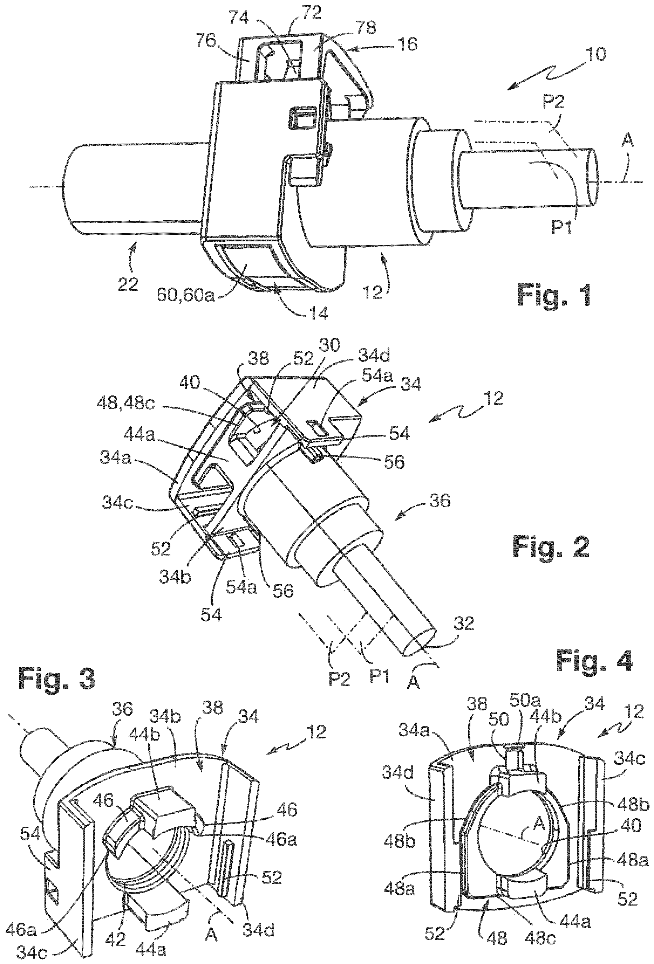

Les figures 1 à 26 illustrent un mode de réalisation d'un dispositif 10 selon l'invention de raccordement fluidique, par exemple pour un circuit d'alimentation en carburant, un circuit d'assistance au freinage d'un véhicule à moteur thermique, un circuit de dépollution SCR (acronyme de l'anglais *Selective Catalytic Réduction*), etc.

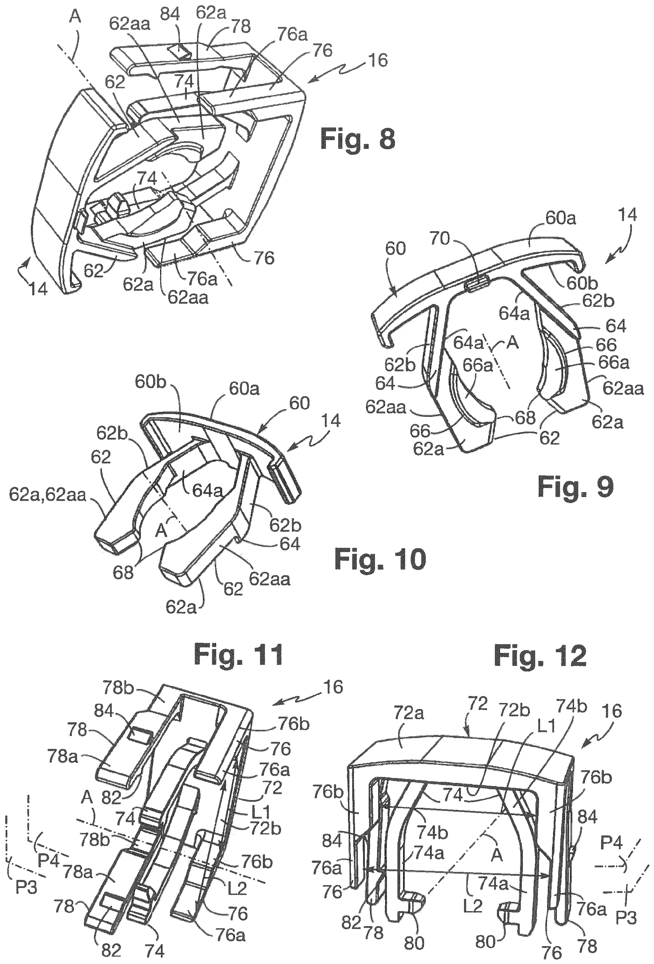

Le dispositif 10 comprend pour l'essentiel trois éléments, à savoir un raccord femelle 12, un verrou 14 et un témoin de verrouillage 16. Le raccord femelle 12 est représenté seul aux figures 2 à 4, le verrou 14 est représenté seul aux figures 9 et 10, et le témoin 16 est représenté seul aux figures 11 et 12. Dans l'exemple représenté, le dispositif 10 comprend d'autres éléments tels qu'un anneau de centrage 18 et des joints d'étanchéité 20 qui seront décrits plus loin dans ce qui suit.

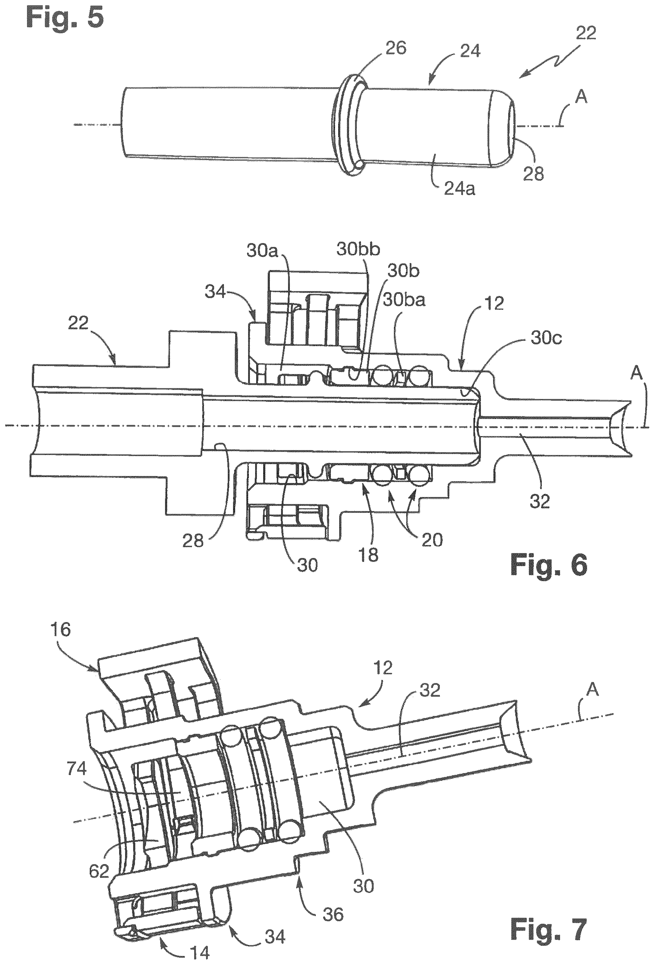

Le dispositif 10 est de plus destiné à coopérer avec un raccord mâle 22 qui est illustré à la figure 5. Ce raccord mâle 22 comprend un embout cylindrique 24 comportant une nervure annulaire externe 26. La nervure 26 est située à une distance axiale prédéterminée de l'extrémité libre de l'embout 24 et la surface cylindrique externe de l'embout qui s'étend entre la nervure 26 et cette extrémité libre est référencée 24a. L'extrémité libre de l'embout 24 est biseautée ou arrondie, comme dans l'exemple représenté, pour faciliter son insertion dans le raccord femelle 12. Par ailleurs, le raccord mâle 22 comprend un alésage axial interne 28 de circulation de fluide.

Le raccord femelle 12 visible notamment aux figures 2 à 4 comprend un logement interne 30 de réception du raccord mâle 22 et en particulier de l'embout 24 de ce raccord, ce logement 30 étant en communication fluidique avec un alésage interne 32 de circulation de fluide. Le logement 30 a un axe A.

Dans la présente demande, les expressions « intérieur » et « extérieur », ou « interne » et « externe », s'apprécient par rapport à cet axe A. Des éléments intérieurs ou internes sont orientés vers l'axe A alors que des éléments extérieurs ou externes sont orientés du côté opposé à l'axe A. Les autres expressions « avant », « arrière », « latéral », « supérieur » et « inférieur » sont utilisées pour mieux comprendre les positionnements des différents éléments, sans que ces indications soient limitatives sur le positionnement du dispositif en cours d'utilisation ou en position de montage sur un véhicule par exemple.

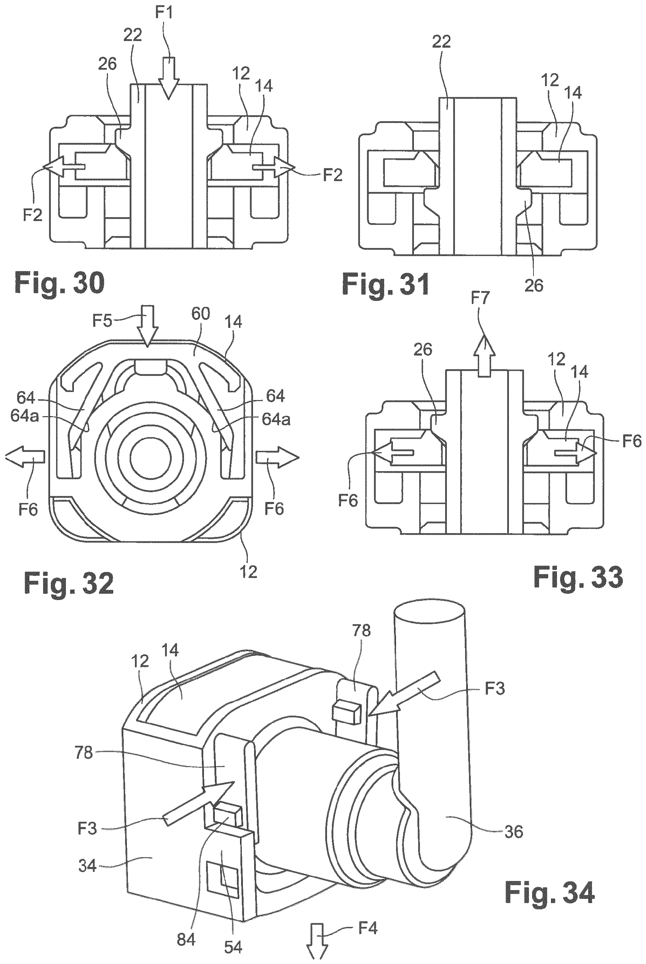

Le raccord femelle 12 comprend une interface de raccordement 34 dans laquelle est formées au moins une partie du logement 30, et une queue de liaison 36 dans laquelle est formé l'alésage 32. L'interface 34 a ici une forme générale parallélépipédique et la queue 36 a une forme générale cylindrique qui peut être droite (figures 1, 2 et 6) ou bien coudée (figure 34).

L'extrémité libre de la queue 36, opposée à l'interface 34, d'une part, et l'extrémité du raccord mâle 22 opposée à l'embout 24, d'autre part, sont destinées à être reliées à des organes à raccorder tels que deux tuyaux d'un circuit fluidique par exemple.

L'interface 34 porte le verrou 14 et le témoin 16. L'interface 34 comprend une cavité interne 38 dans laquelle sont au moins partiellement montés le verrou 14 et le témoin 16.

L'interface 34 comprend deux parois parallèles, respectivement avant et arrière 34a, 34b, et deux parois latérales parallèles 34c, 34d, ces parois définissant entre elles la cavité 38 qui est ouverte à son extrémité supérieure pour le montage du témoin 16, et à son extrémité inférieure pour le montage du verrou 14.

Les parois 34a, 34b sont traversées par le logement 30 et comprennent des ouvertures 40, 42 centrales alignées sur l'axe A. En plus d'être reliées par les parois 34c, 34d, les parois 34a, 34b sont reliées entre elles par deux ponts de matière situés dans la cavité 38, respectivement supérieur 44a, et inférieur 44b. Les ponts 44a, 44b sont diamétralement opposés par rapport à l'axe A. Ils sont ici situés au plus près des ouvertures 40, 42.

La paroi arrière 34b comprend sur sa face avant, qui est située dans la cavité 38, deux ailes latérales 46 qui sont formées en saillie et s'étendent de part et d'autre du pont inférieur 44b en longeant des parties du bord périphérique de l'ouverture 42 (figure 3). Chaque aile 46 a une étendue angulaire d'environ 20-30° dans l'exemple représenté et comprend une extrémité circonférentielle reliée à un côté du pont 44b, et une extrémité circonférentielle 46a opposée qui est orientée sensiblement vers le haut.

La paroi avant 34a comprend sur sa face arrière, qui est située dans la cavité 38, un bossage 48 en saillie qui s'étend tout autour de l'ouverture 40 (figure 4). Le bossage 48 comprend deux bords latéraux extérieurs droits 48a parallèles entre eux et aux parois 34c, 34d et deux bords inférieurs inclinés 48b reliant les extrémités inférieures des bords droits 48a aux côtés du pont inférieur 44b. Les extrémités supérieures des bords droits 48a sont reliées entre elles par un bord supérieur droit 48c sensiblement perpendiculaire aux bords 48a.

La paroi avant 34a comprend en outre un orifice 50 traversant situé entre le pont inférieur 44b et le bord inférieur de cette paroi 34a.

Chacune des parois 34c, 34d comprend une nervure rectiligne 52 sur sa face située dans la cavité 38. Les nervures 52 s'étendent parallèlement aux parois 34a, 34b, au milieu des parois 34c, 34d en direction axiale, et depuis le bord supérieur de chacune de ces parois jusqu'à sensiblement la moitié de la hauteur de ces parois.

Ces parois 34c, 34d se prolongent axialement vers l'arrière pour former deux pattes latérales 54 qui s'étendent parallèlement à distance d'un tronçon cylindrique de la queue 36. Les pattes 54 comprennent chacune un orifice 54a traversant formant un organe d'accrochage. Le tronçon de la queue 36 comprend en outre, en regard de ces pattes 54, des plots en saillie 56 formant également des organes d'accrochage.

Comme on le voit à la figure 2, les plots 56 sont situés dans un premier plan P1 parallèle à l'axe A et les orifices 54a sont situés dans un second plan P2 parallèle à l'axe A et au premier plan P1. Le plan P2 est plus éloigné de l'axe A que ne l'est le plan P1.

Le logement 30, mieux visible aux figures 6 et 7, comprend essentiellement trois portions 30a, 30b, 30c. La portion 30a s'étend sensiblement dans l'interface 34 et a le plus grand diamètre. Les portions 30b, 30c s'étendent coaxialement dans la queue 36, la portion intermédiaire 30b ayant un diamètre inférieur à celui de la portion 30a et supérieur à celui de la portion 30c. Le diamètre de la portion 30c est légèrement supérieur à celui de l'embout 24 du raccord mâle 22 et coopère par glissement avec sa surface 24a.

Un anneau 18 et deux joints annulaires d'étanchéité 20 sont logés dans la portion 30b et sont destinés à être traversés par l'embout 24 du raccord mâle 22. L'anneau 18 peut avoir une fonction de centrage par coopération avec l'embout 24 du raccord mâle 22, et/ou de blocage ou de butée par coopération avec les joints 20. Les joints 20 sont destinés à être comprimés radialement entre la surface 24a de l'embout 24 et la surface cylindrique interne de la portion 30b et peuvent être séparés axialement l'un de l'autre par un rebord annulaire interne 30ba de cette portion 30b ou une entretoise rapportée dans cette portion 30b. Le rebord 30ba ou l'entretoise forme un séparateur de joints 20.

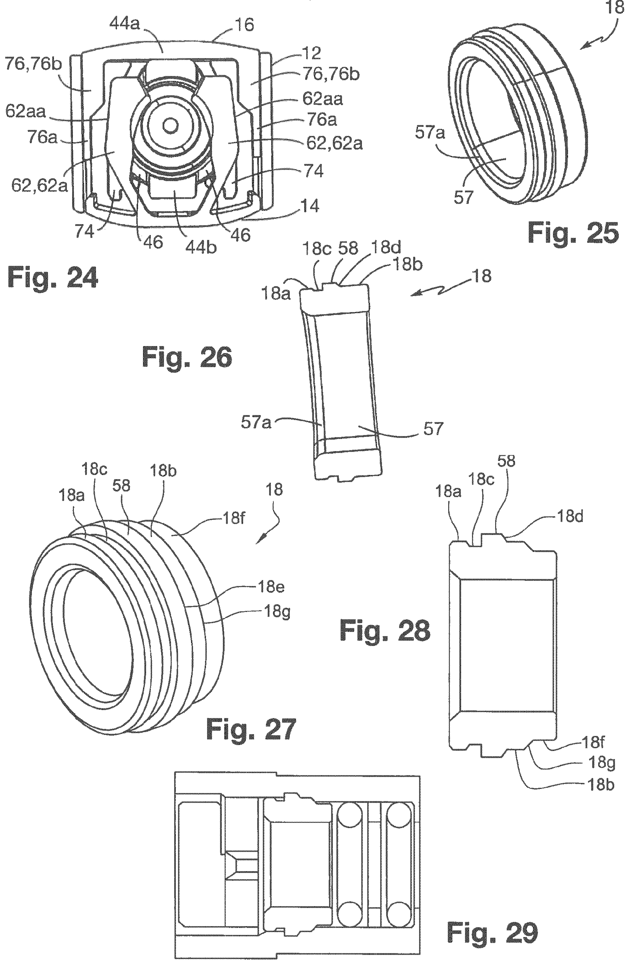

Les joints 20 sont situés entre l'anneau 18 et la portion 30c, cet anneau 18 étant mieux visible aux figures 25 et 26. L'anneau 18 sert de butée aux joints 20. Cet anneau comprend une surface cylindrique interne 57 dont une extrémité axiale avant 57a est évasée pour faciliter l'insertion et le centrage du raccord mâle 22, cette extrémité étant destinée à coopérer avec l'extrémité libre précitée de l'embout 24. L'anneau 18 comprend une périphérie externe qui est conformée pour être emboîtée en force dans un tronçon de forme complémentaire de la portion 30b.

Dans l'exemple représenté, l'anneau 18 comprend un rebord annulaire externe 58 qui coopère par emboîtement avec une rainure annulaire interne 30bb de la portion 30b. L'anneau 18 comprend deux surfaces cylindriques externes sensiblement de même diamètre, respectivement avant 18a et arrière 18b. La surface 18a est reliée au rebord 58 par une rainure cylindrique 18c (de plus petit diamètre que la surface 18a) et la surface 18b est reliée au rebord par une surface tronconique 18d.

Le tronçon de la portion 30b, qui comporte la rainure 30bb, a une forme complémentaire à ces différentes surfaces 18a-18d (figure 6).

Le rebord 58 coopère avec la rainure 30bb pour bloquer axialement l'anneau 18 dans le logement 30 du raccord femelle 12. Ce blocage est utile pour garantir le positionnement de l'anneau 18 et donc des joints 20 du fait des variations de température et de pression du fluide transféré par le dispositif en fonctionnement.

Les figures 27 à 29 représentent une variante de réalisation de l'anneau 18 qui comprend, en plus des caractéristiques de l'anneau des figures 25 et 26, un prolongement arrière comportant une surface cylindrique externe 18f dont le diamètre est inférieur à celui des surfaces 18a, 18b. La surface 18f peut être reliée à la surface 18b par une autre surface tronconique 18g.

Le tronçon de la portion 30b, destiné à recevoir l'anneau 18 des figures 27 et 28, a alors une forme plus complexe complémentaire des surfaces 18a-18f (figure 29). Cette variante permet par exemple d'éviter un mauvais montage de l'anneau 18 dans le logement 30 du raccord femelle, du fait en particulier de la surface 18f de plus petit diamètre qui a une fonction de détrompage

Nous allons maintenant décrire le verrou 14 représenté aux figures 9 et 10.

Le verrou 14 comprend un capot 60 et deux pattes 62 élastiquement déformables. Le capot 60 est destiné à fermer l'extrémité inférieure de la cavité 38 et a donc une forme, ici parallélépipédique, qui est conçue pour fermer cette cavité en s'insérant ici entre les bords inférieurs des parois 34a-34d.

Le verrou 14 a une symétrie par rapport à un plan médian qui passe au milieu du capot 60 et entre les pattes 62. Lorsque le verrou est monté sur le raccord femelle 12, il s'étend dans un plan sensiblement perpendiculaire à l'axe A, cet axe A passant sensiblement entre les pattes 62.

Le capot 60 a une face inférieure 60a visible et une face supérieure 60b reliée aux pattes 62. Les pattes 62 ont chacune une forme générale en V et comprennent des premières branches 62a dont les bords extérieurs 62aa sont parallèles ou inclinées, et des secondes branches 62b qui sont inclinées à environ 40-80° l'une de l'autre et relient les premières branches 62a au capot 60.

Chacune des branches 62b comprend une nervure 64 qui s'étend sur la longueur de cette branche en saillie vers l'avant. Ces nervures 64 comprennent des bords longitudinaux 64a orientés vers l'axe A.

Chacune des branches 62a comprend sur sa face avant un bossage 66 à orientation circonférentielle autour de l'axe A. Ce bossage 66 présente une surface incurvée concave 66a destinée à coopérer avec la nervure 26 du raccord mâle 22 lors de l'insertion de ce dernier dans le raccord femelle 12. Les branches 62a portent chacune à leurs extrémités supérieures, opposées au capot 60, deux dents 68 ou extrémités qui sont orientées l'une vers l'autre. Dans l'exemple représenté, la distance entre les dents 68 représente la plus petite distance entre les branches 62a.

Le capot 60 comprend par ailleurs, sur son bord longitudinal avant, un ergot 70 en saillie.

Nous allons maintenant décrire le témoin 16 représenté aux figures 11 et 12.

Le témoin 16 comprend un capot 72 et trois paires de pattes 74, 76, 78 indépendantes. Le capot 72 est destiné à fermer l'extrémité supérieure de la cavité 38 et a donc une forme, ici parallélépipédique, qui est conçue pour fermer cette cavité en s'insérant ici entre les bords supérieurs des parois 34a-34d et/ou en prenant appui sur certains de ces bords.

Le témoin 16 a une symétrie par rapport à un plan médian qui passe au milieu du capot 72 et entre les pattes 74-78. Lorsque le témoin est monté sur le raccord femelle 12, il s'étend dans un plan sensiblement perpendiculaire à l'axe A, cet axe A passant sensiblement entre les pattes 74-78.

Le capot 72 a une face supérieure 72a visible et une face inférieure 72b reliée aux pattes 74-78.

Les pattes 74 ont chacune une forme générale en V et comprennent des premières branches 74a sensiblement parallèles, et des secondes branches 74b qui sont inclinées à environ 40-80° l'une de l'autre et relient les premières branches 74a au capot 72.

Chacune des branches 74b a une forme générale rectiligne et s'étend sensiblement depuis le milieu de la face 72b jusqu'à une branche 74a.

Chacune des branches 74a a une forme générale rectiligne et comprend à son extrémité inférieure, opposée au capot 72, une dent 80. Les dents 80 des pattes 74 sont orientées l'une vers l'autre, la distance entre les dents 80 représentant la plus petite distance entre les branches 74a.

Les autres pattes 76 et 78 sont situées aux quatre coins de la face 72b du capot 72, les pattes 76 étant situées sur les coins avant et les pattes 78 étant situées sur les coins arrière.

Les pattes 76 sont rectilignes et s'étendent sensiblement perpendiculairement au capot 72. Elles comprennent chacune deux portions, à savoir une portion inférieure 76a et une portion supérieure surépaissie 76b qui relie la portion 76a au capot 72. L'épaisseur des pattes 76 est ici mesurée dans un plan perpendiculaire à l'axe A, entre les bords extérieurs et intérieurs des portions 76a, 76b. La distance L1 entre les portions 76b est inférieure à la distance L2 entre les portions 76a.

Les pattes 78 sont rectilignes et s'étendent sensiblement perpendiculairement au capot 72. Elles comprennent chacune deux portions, à savoir une portion inférieure élargie 78a et une portion supérieure 78b qui relie la portion 78a au capot 72. La largeur des pattes 78 est ici mesurée dans un plan parallèle à l'axe A et passant par un bord latéral du capot 72.

Les portions 78a des pattes 78 comprennent deux dents intérieures 82, c'est-à-dire orientées vers l'axe A, et deux dents extérieures 84. Les dents 82 sont situées dans un plan P3 parallèle à l'axe A et au capot 72, et les dents 84 sont situées dans un plan P4 parallèle au plan P3 et situé entre le plan P3 et le capot 72.

Les portions 78a forment des organes de préhension des pattes 78 et donc du témoin 16.

La figure 1 montre la position de montage, libre sensiblement sans contrainte, du verrou 14 sur le raccord femelle 12. On constate que le capot 60 du verrou 14 est engagé entre les bords inférieurs des parois 34a-34d et que sa face inférieure 60a est alignée avec ces bords inférieurs.

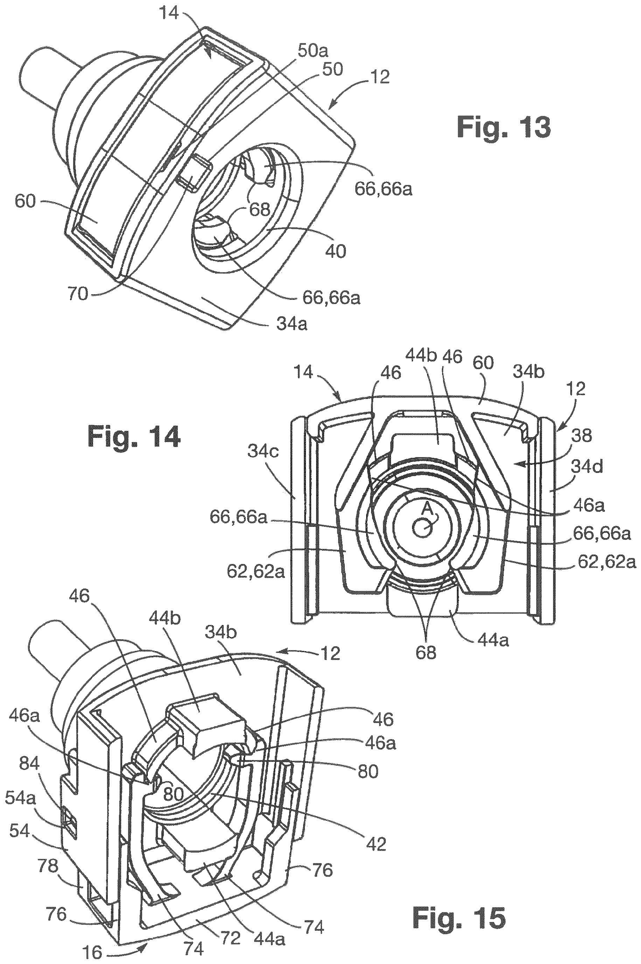

Dans cette position, représentée également aux figures 13 et 14, l'ergot 70 du verrou 14 est engagé dans l'orifice 50 du raccord femelle 12, ce qui permet de rendre imperdable le verrou vis-à-vis du raccord femelle. Lors de l'insertion du verrou 14 dans la cavité 38 du raccord 12, les pattes 62 sont engagées en premier dans la cavité en passant de part et d'autre du pont inférieur 44b, jusqu'à ce que l'ergot 70 prenne appui sur le bord inférieur de la paroi avant 34a. Cette paroi avant 34a peut comprendre une encoche 50a au droit de l'orifice 50, pour faciliter le passage de l'ergot 70 jusque dans cet orifice 50. L'élasticité des pièces, qui sont par exemple en matière plastique, est telle que l'engagement de l'ergot 70 dans l'orifice 50 est obtenu par encliquetage élastique, c'est-à-dire par une déformation élastique de l'ergot 70 lors du passage du point dur d'appui de l'ergot 70 sur le fond de l'encoche 50a, et retour élastique lors de l'engagement de l'ergot 70 dans l'orifice 50.

Toujours dans cette position, les pattes 62 sont situées de part et d'autre de l'axe A et leurs dents 68 sont à proximité du pont supérieur 44a et peuvent être en appui sur ce pont supérieur 44a, comme cela est visible à la figure 14. Pour atteindre cette position, un autre encliquetage élastique a pu être nécessaire lors de l'insertion du verrou 14 dans la cavité, par appui et glissement des dents 68 sur le pont inférieur 44b pour assurer l'écartement des pattes 62 jusqu'à ce que la distance inter-dents 68 soit supérieure ou égale à l'épaisseur du pont 44b.

La figure 14 permet de constater que, dans cette position, les bossages circonférentiels 66 des pattes 62 sont centrés sur l'axe A. La figure 13 permet en outre de constater que l'ouverture 40 de la paroi avant 34a a un diamètre tel que les bossages 66 sont visibles et accessibles à travers cette ouverture, en particulier pour que, dès l'insertion du raccord mâle 22 dans le raccord femelle 12, son embout 24 coopère avec les bossages 66 en prenant appui sur leurs surfaces 66a pour solliciter vers l'extérieur et écarter les pattes 62.

Les figures 1, 15 et 16 montrent en outre une première position de montage du témoin 16 sur le raccord femelle 12, qui est une position de libération du verrou 14.

Dans cette position, les pattes 74 et 76 du témoin 16 sont engagées dans la cavité 38 du raccord femelle 12 et les pattes 78 s'étendent en arrière de la paroi arrière 34b, en étant chacune intercalée entre le tronçon précité de la queue 36 et une des pattes 54. Le capot 72 n'est pas encore engagé entre les bords supérieurs des parois 34a-34d.

Les pattes 74 sont situées de part et d'autre de l'axe A et leurs dents 80 sont en appui sur ou à faible distance des bords 46a des ailes 46. On peut constater à la figure 15 qu'elles sont en saillie vers l'intérieur et la distance inter-dents est inférieure au diamètre de l'ouverture 42 de la paroi arrière 34b. Le pont 44a s'étend entre les pattes 74.

Les pattes 76 sont engagées entre la paroi avant 34a et les nervures 52. Les nervures 52 définissent ainsi avec la paroi avant 34a deux pistes de guidage des pattes 76 et donc du témoin 16. Dans cette position, seules les portions 76a des pattes 76, voire également une partie des portions 76b, sont engagées dans la cavité 38.

Lors du montage du témoin 16, les pattes 78 peuvent coopérer par leurs bords avant avec la face arrière de la paroi arrière 34b. Le témoin 16 est déplacé en translation dans un plan perpendiculaire à l'axe A, jusqu'à ce que les crochets 84 s'engagent par encliquetage élastique dans les orifices 54a des pattes 54, d'une part, et que les crochets 82 passent les points durs formés par les plots 56, d'autre part.

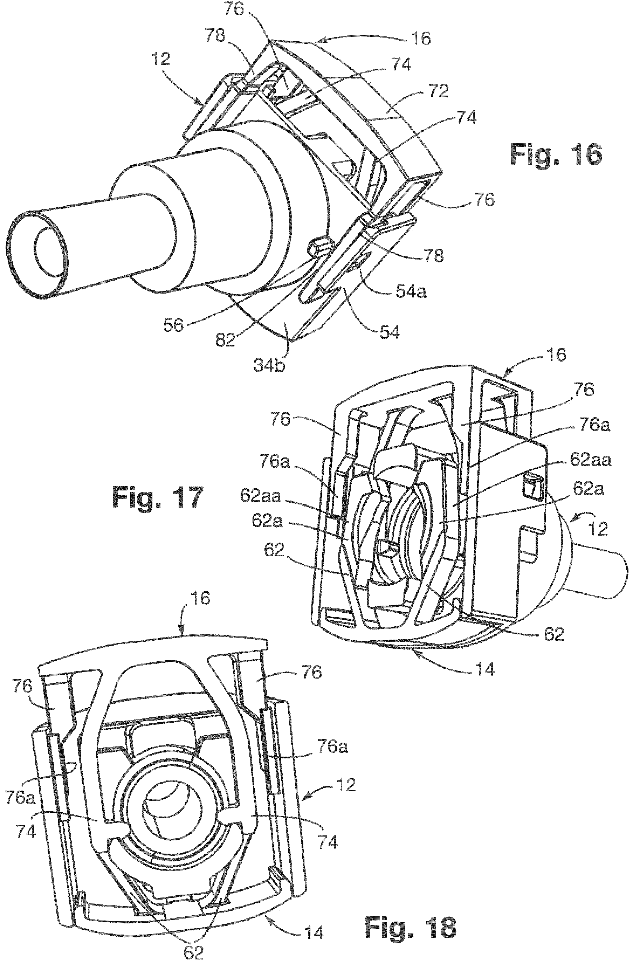

Comme évoqué dans ce qui précède et visible à la figure 16, les crochets 82, 84, d'une part, et les orifices 54a et les plots 56, d'autre part, sont situés dans des plans différents. Lors du montage du témoin 16, les pattes 78 doivent se déformer élastiquement pour passer chacune la « chicane » imposée par ce décalage de plans. Les pattes 78 subissent en effet une première déformation vers l'intérieur du fait des crochets 84 qui prennent appui sur les pattes 54, et subissent de plus une seconde déformation cette fois-ci vers l'extérieur du fait des crochets 82 qui prennent appui sur les plots 56. En position montée, représentée dans les dessins, les crochets 84 sont engagés dans les orifices 54a et les crochets 82 sont situés sous les plots 56. Le témoin 16 est ainsi rendu imperdable vis-à-vis du raccord femelle 12.

Les figures 8, 17 et 18 représentent les positions relatives du verrou 14 et du témoin 16, dans la cavité 38 du raccord femelle 12, lorsque le témoin 16 est dans la position précitée de libération du verrou 14.

On constate tout d'abord dans la figure 8 que les pattes 62 du verrou 14 sont destinées à être sensiblement coplanaires avec les pattes 76 du témoin 16, dans un plan perpendiculaire à l'axe A. Les bords extérieurs 62aa de leurs branches 62a sont sensiblement en regard des portions 76a des pattes 76. La figure 17 montre la distance entre les bords 62aa et les portions 76a qui autorise un écartement des portions 62a et donc des pattes 62 dans ce plan. On comprend ainsi que, lorsque le témoin 16 est dans cette position, les pattes 62 du verrou 14 peuvent être écartées l'une de l'autre.

Par ailleurs, les pattes 74 du témoin 16 sont disposées juste en arrière des pattes 62 du verrou 14, ce qui est visible aux figures 7, 8 et 20.

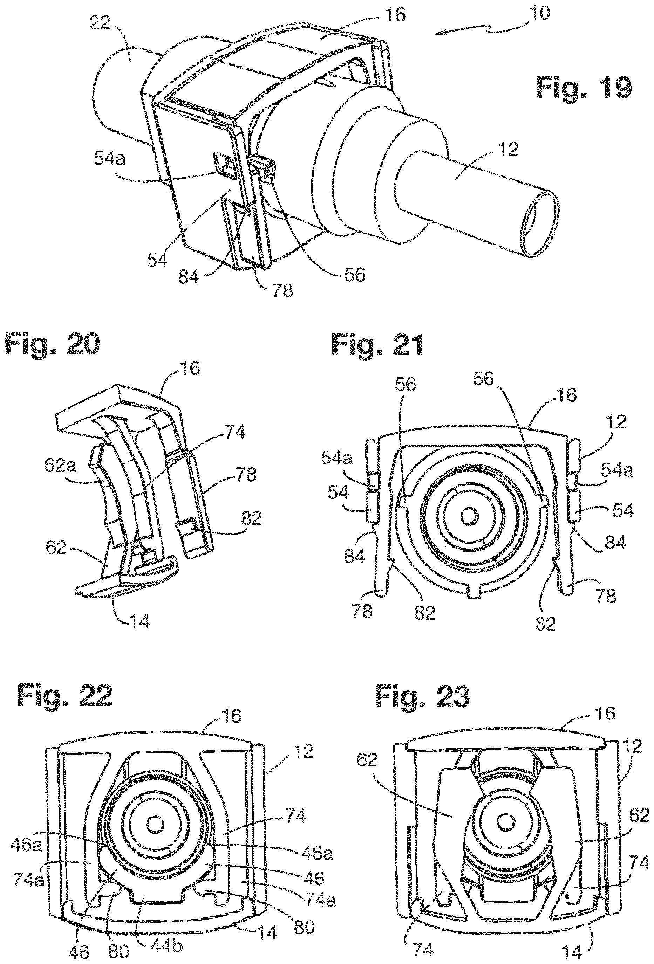

Les figures 19 à 24 illustrent les positions relatives du verrou 14 et du témoin 16, dans la cavité 38 du raccord femelle 12, lorsque le témoin 16 est dans la position de verrouillage du verrou 14.

Le témoin 16 est amené dans cette position en exerçant une force sur le capot 72, en direction de l'axe A, jusqu'à ce que le capot s'insère entre les bords supérieurs des parois 34a, 34c et 34d, le capot reposant sur le bord supérieur de la paroi arrière 34b dans l'exemple représenté.

Dans cette position, les crochets 84 des pattes 78 sont situés sous les pattes 54 et assurent une retenue du témoin 16 dans cette position vis-à-vis du raccord femelle 12. On comprend dès lors que le passage entre les deux positions du témoin 16 a entraîné une déformation élastique des pattes 78 dont les crochets 84 ont dû sortir des orifices 54a des pattes 54, ainsi qu'un encliquetage élastique de ces crochets 84 sous les pattes 54.

Par ailleurs, les pattes 76 ont davantage coulissé dans les pistes de guidage définies par les nervures 52 et ont leurs portions surépaissies 76b qui sont désormais sensiblement en regard des bords extérieurs 62aa des pattes 62 du verrou 14, pour limiter leur écartement.

Enfin, les branches 74a des pattes 74 s'étendent désormais de part et d'autre des ailes 46 et leurs dents 80 prennent appui sur les bords inférieurs de ces ailes. Dans cette position, les pattes 74 sont à l'état libre et peuvent être en appui, par des bords intérieurs de leurs branches 74a, sur les ailes 46 ou leurs bords 46a.

On se réfère désormais aux figures 30 et 31 qui illustrent des étapes d'insertion du raccord mâle 22 dans le raccord femelle 12.

Compte tenu de ce qui précède, on comprend que cette insertion n'est possible que lorsque le témoin 16 est dans la position de libération du verrou 14 représentée à la figure 1 notamment.

Le raccord mâle 22 est inséré dans le logement 30 du raccord femelle 12 en engageant l'embout 24 dans ce logement jusqu'à ce que la nervure 26 de l'embout 24 prenne appui sur les surfaces 66a des bossages 66 des pattes 62 du verrou 14. Juste avant cela, la surface cylindrique 24a de l'embout coopère avec la surface 57 de l'anneau 18 pour centrer et guider cette insertion, puis avec les joints 20 pour étanchéifier le raccordement.

Un appui axial sur le raccord mâle 22 (flèche F1) va provoquer un écartement des pattes 62 du verrou 14 (flèches F2), cet écartement étant autorisé par le témoin 16 comme évoqué dans ce qui précède. L'insertion du raccord mâle 22 est poursuivie jusqu'à ce que la nervure 26 se retrouve en arrière des pattes 62 du verrou, qui reprennent alors par retour élastique leur position initiale (figure 31). Dans cette position, bien que cela ne soit pas visible, la nervure 26 prend appui radialement sur les dents 80 des pattes 74 du témoin 16 et les sollicite vers l'extérieur. Les pattes 74 s'écartent et ne sont plus en appui sur les bords 46a des ailes 46. C'est à cette condition que le témoin 16 peut être déplacé en translation de la position de la figure 1 à la position de la figure 19 dans laquelle il verrouille le verrou 14 car les pattes 62 de ce dernier ne peuvent plus s'écarter suffisamment l'une de l'autre pour pouvoir retirer le raccord mâle 22 du raccord femelle 12.

En fonctionnement, la pression du fluide transféré dans le dispositif va générer une force axiale tendant le raccord mâle 22 à sortir du raccord femelle 12. Cette force va se traduire par l'appui axial de la nervure 26 du raccord 22 sur les faces arrière des branches 62 du verrou. Ces branches 62 vont alors prendre appui par leurs faces avant s'étendant autour des bossages 66 sur le bord périphérique de l'ouverture 40 de la paroi avant 34a, à l'intérieur de la cavité 38, ce qui va permettre d'immobiliser l'ensemble et garantir le raccordement.

Un démontage du dispositif 10 est toutefois possible, comme représenté aux figures 32 à 34. Une première étape consiste à redéplacer le témoin 16 dans sa position de libération du verrou 14. Ceci est schématiquement représenté à la figure 34 ou des forces latérales dirigées l'une vers l'autre et appliquées sur les portions 78a des pattes 78 sont appliquées simultanément (flèches F3). Ceci permet d'éloigner les crochets 84 des pattes 54. Une force selon la flèche F4 doit alors être appliquée sur le témoin 16 pour le ramener dans sa position illustrée à la figure 1. Il suffit alors d'appliquer une force d'appui sur le capot 60 du verrou 14 (flèche F5) de façon à ce que les nervures 64 des pattes 62 du verrou 14 prennent appui et glissent par leurs bords 64a sur les bords 48b du bossage 48, ce qui va provoquer un écartement des pattes 62 (flèche F6) suffisant de sorte que la distance inter-dents 68 soit supérieure ou égale au diamètre de la nervure 26 du raccord mâle 22. Ce dernier peut alors être retiré par translation axiale vers l'avant (flèche F7).

Le dispositif selon l'invention peut être utilisé dans tous les domaines de transfert de fluide, par exemple à basse pression (inférieure ou égale à 15 bars). Le fluide transféré peut être de l'eau, du carburant, de l'huile, un liquide lave-glace, de l'air, un fluide SCR, etc.

## Revendications

1. Dispositif (10) de raccordement fluidique, en particulier pour un circuit de fluide d'un véhicule automobile, comportant :
- un raccord fluidique femelle (12) comportant un logement (30) d'insertion d'un raccord fluidique mâle (22), par translation le long d'un axe A,
- un verrou (14) de forme générale en U porté par ledit raccord femelle et comportant une paire de pattes (62) élastiquement déformables, ces pattes étant disposées sensiblement dans un premier plan perpendiculaire audit axe A et de part et d'autre dudit axe et étant destinées à coopérer par encliquetage élastique avec ledit raccord mâle de façon à assurer une retenue dudit raccord mâle dans ledit raccord femelle le long dudit axe A,
- un témoin de verrouillage (16) porté par ledit raccord femelle et apte à se déplacer en translation dans un second plan perpendiculaire à l'axe A, entre une première position de libération dudit verrou et une seconde position de blocage dudit verrou (14),
dans lequel ledit témoin comprend au moins une première paire de pattes (74) et une deuxième paire de pattes (76), les pattes de la première paire étant séparées des pattes de la deuxième paire et les pattes de la première paire ayant une capacité de déformation élastique par écartement l'une de l'autre, qui est différente de la même capacité de la deuxième paire,
- ladite première paire de pattes étant destinée à coopérer par déformation élastique avec ledit raccord mâle, depuis une première position sensiblement libre sans contrainte dans laquelle ces pattes coopèrent avec ledit raccord femelle pour interdire une translation du témoin dans ledit second plan vers l'axe A, jusqu'à une position contrainte dans laquelle ledit témoin est apte à se déplacer en translation dans le second plan,
- ladite deuxième paire de pattes étant destinée à coopérer par butée avec les pattes dudit verrou pour limiter leur écartement, lorsque ledit témoin est dans sa seconde position,
**caractérisé en ce que** les pattes (76) de la deuxième paire sont configurées pour être chacune prises en sandwich entre une des pattes (62) dudit verrou (14) et une paroi latérale (34c, 34d) dudit raccord femelle (12).

2. Dispositif (10) selon la revendication 1, dans lequel ledit témoin (16) comprend une troisième paire de pattes (78) qui sont séparées des pattes (74, 76) des première et de deuxième paires et qui ont une capacité de déformation élastique par écartement l'une de l'autre, qui est différente de la même capacité de la première et/ou de la deuxième paire(s), ladite troisième paire de pattes étant destinée à coopérer par encliquetage élastique avec ledit raccord femelle (12) pour retenir ledit témoin vis-à-vis dudit raccord femelle en translation dans ledit second plan.

3. Dispositif (10) selon la revendication 2, dans lequel les pattes (78) de ladite troisième paire comprennent des crochets (82) orientés vers l'intérieur par rapport à l'axe A, et des crochets (84) orientés vers l'extérieur.

4. Dispositif (10) selon la revendication 3, dans lequel ledit raccord femelle (12) comprend une interface de raccordement (34) comportant ledit logement (30) et reliée à une queue de liaison (36) s'étendant d'un côté dudit interface le long dudit axe A, la queue de liaison comportant une partie cylindrique comportant des premiers organes d'accrochage (56) orientés vers l'extérieur par rapport à l'axe A et configurés pour coopérer avec lesdits crochets intérieurs (82), et ladite interface comportant deux pattes (54) en regard des premiers organes et comportant des seconds organes d'accrochage (54a) configurés pour coopérer avec lesdits crochets extérieurs (84).

5. Dispositif (10) selon la revendication 4, dans lequel lesdits premiers organes (56) sont situés dans un troisième plan (P2) parallèle à l'axe A, et lesdits seconds organes (54a) sont situés dans un quatrième plan (P1) parallèle au troisième plan et plus éloigné de l'axe A que ne l'est le troisième plan.

6. Dispositif (10) selon l'une des revendications 2 à 5, dans lequel les pattes (78) de ladite troisième paire sont configurées pour subir chacune une double flexion, respectivement vers l'intérieur et vers l'extérieur par rapport à l'axe A, lors du passage du témoin (16) entre sa première et sa seconde position, et inversement.

7. Dispositif (10) selon l'une des revendications 1 à 6, dans lequel les paires de pattes (74, 76, 78) s'étendent dans des plans parallèles et décalées les uns des autres.

8. Dispositif (10) selon la revendication 7, en dépendance de l'une des revendications 2 à 6, dans lequel le plan de la première paire de pattes (74) est situé entre les plans des deuxième et troisième paires de pattes (76, 78).

9. Dispositif (10) selon la revendication 7 ou 8, en dépendance de l'une des revendications 2 à 6, dans lequel les pattes (78) de la troisième paire sont alignées axialement avec les pattes (76) de la deuxième paire.

10. Dispositif (10) selon l'une des revendications précédentes, dans lequel les paires de pattes (74, 76, 78) sont reliées à un capot (72) de fermeture d'une cavité (38) dudit raccord femelle (12).

11. Dispositif (10) selon la revendication 10, dans lequel le capot (72) a une forme générale plane et parallélépipédique, et les pattes (76, 78) des deuxième et troisième paires sont reliées respectivement aux quatre coins d'une des faces (72b) du capot.

12. Dispositif (10) selon la revendication 11, dans lequel les pattes (74) de la première paire sont reliées sensiblement au milieu de ladite face (72b) du capot (72).

13. Dispositif (10) selon l'une des revendications 10 à 12, dans lequel les pattes (76) de la deuxième paire comprennent des premières portions libres (76a) écartées l'une de l'autre d'une distance L2 et reliées audit capot (72) par des secondes portions (76b) écartées l'une de l'autre d'une distance L1 qui est inférieure à L2, lesdites pattes (62) du verrou (14) étant destinées à être en vis-à-vis desdites premières portions (76a) lorsque le témoin (16) est dans sa première position, et à être en vis-à-vis desdites secondes portions (76b) lorsque le témoin est dans sa seconde position.

14. Dispositif (10) selon l'une des revendications précédentes, dans lequel ledit raccord femelle (12) comprend une paroi (34b) comportant une ouverture de passage dudit raccord mâle (22), lesdites pattes (62) dudit verrou étant aptes à prendre appui sur une surépaisseur de cette paroi qui forme par exemple un bossage annulaire (48) autour de ladite ouverture.

## Patentansprüche

1. Flüssigkeitsanschlussvorrichtung (10), insbesondere für einen Flüssigkeitskreislauf eines Kraftfahrzeugs, umfassend:
- eine Flüssigkeitsanschlussbuchse (12) mit einer Aufnahme (30) zum Einsetzen eines Flüssigkeitsanschlusssteckers (22) durch Translation entlang einer A-Achse,
- einen allgemein U-förmigen Riegel (14), der von der Anschlussbuchse getragen wird und ein Paar elastisch verformbarer Laschen (62) umfasst, wobei diese Laschen im Wesentlichen in einer ersten Ebene senkrecht zu der A-Achse und beiderseits der Achse angeordnet sind und dazu bestimmt sind, durch elastisches Einrasten mit dem Anschlussstecker zusammenzuwirken, um einen Halt des Anschlusssteckers in der Anschlussbuchse entlang der A-Achse zu gewährleisten,
- eine Verriegelungsanzeige (16), die von der Anschlussbuchse getragen wird und sich in einer zweiten Ebene senkrecht zur A-Achse zwischen einer ersten Position zum Freigeben des Riegels und einer zweiten Position zum Blockieren des Riegels (14) translatorisch bewegen kann,
wobei die Anzeige mindestens ein erstes Laschenpaar (74) und ein zweites Laschenpaar (76) umfasst, wobei die Laschen des ersten Paars von den Laschen des zweiten Paars getrennt sind und die Laschen des ersten Paars eine Fähigkeit zur elastischen Verformung durch Auseinanderziehen haben, die sich von der gleichen Fähigkeit des zweiten Paars unterscheidet,
- wobei das erste Laschenpaar dazu bestimmt ist, durch elastische Verformung mit dem Anschlussstecker zusammenzuwirken, von einer ersten, im Wesentlichen freien Position ohne Zwang, in der diese Laschen mit der Anschlussbuchse zusammenwirken, um eine Translation der Anzeige in der zweiten Ebene in Richtung der A-Achse zu unterbinden, bis zu einer Zwangsposition, in der die Anzeige in der Lage ist, sich translatorisch in der zweiten Ebene zu bewegen,
- wobei das zweite Laschenpaar dazu bestimmt ist, an den Laschen des Riegels zusammenzuwirken durch Anstoßen, um deren Abstand zu begrenzen, wenn sich die Anzeige in ihrer zweiten Position befindet,
**dadurch gekennzeichnet, dass** die Laschen (76) des zweiten Paars so konfiguriert sind, dass sie jeweils zwischen einer der Laschen (62) des Riegels (14) und einer Seitenwand (34c, 34d) der Anschlussbuchse (12) eingeklemmt sind.

2. Vorrichtung (10) nach Anspruch 1, wobei die Anzeige (16) ein drittes Laschenpaar (78) umfasst, die von den Laschen (74, 76) des ersten und zweiten Paars getrennt sind und eine Fähigkeit zur elastischen Verformung durch Auseinanderziehen haben, die sich von der gleichen Fähigkeit des ersten und/oder zweiten Paars unterscheidet, wobei das dritte Paar Laschen dazu bestimmt ist, mit der Anschlussbuchse (12) elastisch einrastend zusammenzuwirken, um die Anzeige gegenüber der Anschlussbuchse in der zweiten Ebene translatorisch festzuhalten.

3. Vorrichtung (10) nach Anspruch 2, wobei die Laschen (78) des dritten Paars Haken (82), die bezüglich der A-Achse nach innen gerichtet sind, und Haken (84), die nach außen gerichtet sind, umfassen.

4. Vorrichtung (10) nach Anspruch 3, wobei die Anschlussbuchse (12) eine Anschlusschnittstelle (34) umfasst, die die Aufnahme (30) umfasst und mit einem Verbindungsendstück (36) verbunden ist, das sich auf einer Seite der Schnittstelle entlang der A-Achse erstreckt, wobei das Verbindungsendstück einen zylindrischen Teil mit ersten Einhakelementen (56) umfasst, die in Bezug auf die A-Achse nach außen gerichtet sind und so gestaltet sind, dass sie mit den inneren Haken (82) zusammenwirken, und wobei die Schnittstelle zwei Laschen (54) umfasst, die den ersten Elementen gegenüberliegen und zweite Einhakelemente (54a) umfassen, die so gestaltet sind, dass sie mit den äußeren Haken (84) zusammenwirken.

5. Vorrichtung (10) nach Anspruch 4, wobei die ersten Elemente (56) in einer dritten Ebene (P2) parallel zur A-Achse liegen und die zweiten Elemente (54a) in einer vierten Ebene (P1) parallel zur dritten Ebene liegen und weiter von der A-Achse entfernt sind als die dritte Ebene.

6. Vorrichtung (10) nach einem der Ansprüche 2 bis 5, wobei die Laschen (78) des dritten Paars so konfiguriert sind, dass sie jeweils eine doppelte Biegung erfahren, jeweils nach innen und nach außen in Bezug auf die A-Achse, während die Anzeige (16) zwischen ihrer ersten und ihrer zweiten Position und umgekehrt wechselt.

7. Vorrichtung (10) nach einem der Ansprüche 1 bis 6, wobei sich die Laschenpaare (74, 76, 78) in parallelen, zueinander versetzten Ebenen erstrecken.

8. Vorrichtung (10) nach Anspruch 7, in Abhängigkeit von einem der Ansprüche 2 bis 6, wobei die Ebene des ersten Laschenpaars (74) zwischen den Ebenen des zweiten und des dritten Laschenpaars (76, 78) liegt.

9. Vorrichtung (10) nach Anspruch 7 oder 8, in Abhängigkeit von einem der Ansprüche 2 bis 6, wobei die Laschen (78) des dritten Paars axial mit den Laschen (76) des zweiten Paars ausgerichtet sind.

10. Vorrichtung (10) nach einem der vorstehenden Ansprüche, wobei die Laschenpaare (74, 76, 78) mit einer Kappe (72) zum Verschließen eines Hohlraums (38) der Anschlussbuchse (12) verbunden sind.

11. Vorrichtung (10) nach Anspruch 10, wobei die Kappe (72) eine allgemein ebene, parallelepipedische Form hat und die Laschen (76, 78) des zweiten und dritten Paars jeweils mit den vier Ecken einer der Flächen (72b) der Kappe verbunden sind.

12. Vorrichtung (10) nach Anspruch 11, wobei die Laschen (74) des ersten Paars im Wesentlichen in der Mitte der genannten Fläche (72b) der Kappe (72) verbunden sind.

13. Vorrichtung (10) nach einem der Ansprüche 10 bis 12, wobei die Laschen (76) des zweiten Paars erste freie Abschnitte (76a) umfassen, die um einen Abstand L2 voneinander beabstandet sind und mit der Kappe (72) durch zweite Abschnitte (76b) verbunden sind, die um einen Abstand L1, der kleiner als L2 ist, voneinander beabstandet sind, wobei die Laschen (62) des Riegels (14) dazu bestimmt sind, den ersten Abschnitten (76a) zugewandt zu sein, wenn sich die Anzeige (16) in ihrer ersten Position befindet, und den zweiten Abschnitten (76b) zugewandt zu sein, wenn sich die Anzeige in ihrer zweiten Position befindet.

14. Vorrichtung (10) nach einem der vorstehenden Ansprüche, wobei die Anschlussbuchse (12) eine Wand (34b) mit einer Durchgangsöffnung für den Anschlussstecker (22) umfasst, wobei die Laschen (62) des Riegels geeignet sind, sich auf einer Verdickung dieser Wand abzustützen, die beispielsweise einen ringförmigen Vorsprung (48) um die Öffnung bildet.

## Claims

1. Fluidic connection device (10), in particular for a fluid circuit of a motor vehicle, comprising:
- a female fluidic connector (12) comprising a housing (30) for inserting a male fluidic connector (22), by translation along an axis (A),
- a generally U-shaped lock (14) carried by said female connector and comprising a pair of elastically deformable legs (62), these legs being arranged substantially in a first plane, perpendicular to said axis (A) and on either side of said axis and being intended to co-operate by elastic snap-fitting with said male connector so as to ensure a retaining of said male connector in said female connector along said axis (A),
- a locking indicator (16) carried by said female connector and capable of being moved in translation in a second plane, perpendicular to the axis (A), between a first position for releasing said lock and a second position for locking said lock (14),
said indicator comprises at least one first pair of legs (74) and a second pair of legs (76), the legs of the first pair being separated from the legs of the second pair and the legs of the first pair having an elastic deformation capacity by displacement from one another, which is different from the same capacity of the second pair,
- said first pair of legs being intended to co-operate by elastic deformation with said male connector, from a first substantially free position without constraint, wherein these legs co-operate with said female connector to forbid a translation of the indicator in said second plane towards the axis (A), up to a constrained position, wherein said indicator is capable of being moved in translation in the second plane,
- said second pair of legs being intended to co-operate by abutting with the legs of said lock to limit their displacement, when said indicator is in its second position,
**characterised in that** the legs (76) of the second pair are configured to each be sandwiched between one of the legs (62) of said lock (14) and a side wall (34c, 34d) of said female connector (12).

2. Device (10) according to claim 1, wherein said indicator (16) comprises a third pair of legs (78) which are separated from the legs (74, 76) of the first and second pairs and which have an elastic deformation capacity by displacing one from the other, which is different from the same capacity of the first and/or of the second pair(s), said third pair of legs being intended to co-operate by elastic snap-fitting with said female connector (12) to retain said indicator opposite said female connector in translation in said second plane.

3. Device (10) according to claim 2, wherein the legs (78) of said third pair comprise hooks (82) oriented inwards with respect to the axis (A), and hooks (84) oriented outwards with respect to the axis (A).

4. Device (10) according to claim 3, wherein said female connector (12) comprises a connection interface (34) comprising said housing (30) and connected to a connecting line (36) extending from one side of said interface along said axis (A), the connecting line comprising a cylindrical portion comprising first fastening members (56) oriented outwards with respect to the axis (A) and configured to co-operate with said inner hooks (82), and said interface comprising two legs (54) facing the first members and comprising the second fastening members (54a) configured to co-operate with said outer hooks (84).

5. Device (10) according to claim 4, wherein said first members (56) are located in a third plane (P2) parallel to the axis (A), and said second members (54a) are located in a fourth plane (P1) parallel to the third plane and further away from the axis (A) than it is from the third plane.

6. Device (10) according to one of claims 2 to 5, wherein the legs (78) of said third pair are configured to each undergo a double flexion, respectively inwards and outwards, with respect to the axis (A), during the passage of the indicator (16) between its first and the second position, and conversely.

7. Device (10) according to one of claims 1 to 6, wherein the pairs of legs (74, 76, 78) extend into the planes parallel and offset from one another.

8. Device (10) according to claim 7, dependent on one of claims 2 to 6, wherein the plane of the first pair of legs (74) is located between the planes of the second and third pairs of legs (76, 78).

9. Device (10) according to claim 7 or 8, dependent on one of claims 2 to 6, wherein the legs (78) of the third pair are aligned axially with the legs (76) of the second pair.

10. Device (10) according to one of the preceding claims, wherein the pairs of legs (74, 76, 78) are connected to a closing cap (72) of a cavity (38) of said female connector (12).

11. Device (10) according to claim 10, wherein the cap (72) has a general flat and parallelepiped shape, and the legs (76, 78) of the second and third pairs are connected respectively to the four corners of one of the faces (72b) of the cap.

12. Device (10) according to claim 11, wherein the legs (74) of the first pair are connected substantially to the middle of said face (72b) of the cap (72).

13. Device (10) according to one of the preceding claims, wherein the legs (76) of the second pair comprise first free portions (76a) displaced from one another by a distance L2 and connected to said cap (72) by second portions (76b) displaced from one another by a distance L1, which is less than L2, said legs (62) of the lock (14) being intended to be opposite said first portions (76a) when the indicator (16) is in its first position, and to be opposite said second portions (76b) when the indicator is in its second position.

14. Device (10) according to one of the preceding claims, wherein said female connector (12) comprises a wall (34b) comprising an passage opening of said male connector (22), said legs (62) of said lock being capable of bearing onto an excess thickness of this wall which forms, for example, an annular boss (48) around said opening.
